(19) Europäisches Patentamt
European Patent Office
Office européen des brevets

(11) Veröffentlichungsnummer: **0 276 733 B1**

# (12) EUROPÄISCHE PATENTSCHRIFT

(45) Veröffentlichungstag der Patentschrift: **24.07.91**

(51) Int. Cl.⁵: **C08F 222/40**

(21) Anmeldenummer: **88100740.5**

(22) Anmeldetag: **20.01.88**

## (54) Hitzehärtbare Formmassen.

(30) Priorität: **23.01.87 DE 3701900**

(43) Veröffentlichungstag der Anmeldung:
**03.08.88 Patentblatt 88/31**

(45) Bekanntmachung des Hinweises auf die Patenterteilung:
**24.07.91 Patentblatt 91/30**

(84) Benannte Vertragsstaaten:
**CH DE ES FR GB IT LI NL**

(56) Entgegenhaltungen:
**EP-A- 0 014 816**

(73) Patentinhaber: **BASF Aktiengesellschaft**
**Carl-Bosch-Strasse 38**
**W-6700 Ludwigshafen(DE)**

(72) Erfinder: **Schornick, Gunnar, Dr.**
**Dr.-Konrad-Adenauer-Strasse 8**
**W-6719 Neuleiningen(DE)**
Erfinder: **Eisenbarth, Philipp, Dr.**
**Gutleutstrasse 12**
**W-6702 Bad Duerkheim(DE)**
Erfinder: **Schuhmacher, Rudolf, Dr.**
**Schulgaesschen 4**
**W-6737 Boehl-Iggelheim(DE)**
Erfinder: **Boyd, Jack Douglas, Dr.**
**Camino Buernero**
**San Clemente California 92672(US)**

**EP 0 276 733 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft hitzehärtbare Formmassen auf Basis von Bismaleinimid-Harzen.

Bismaleinimidharze, die nach der DE-B-1 770 867 aromatische Diamine als Comonomere enthalten, weisen zwar nach dem Aushärten selbst bei Temperaturen über 200 °C hervorragende mechanische und elektrische Eigenschaften auf, sie haben jedoch eine geringe Löslichkeit in üblichen Lösungsmitteln und ihre Aushärtungsprodukte sind sehr spröde.

Bismaleinimidharze, die nach der DE-A-2 459 925 Polyphenole als Comonomere enthalten, weisen eine ungenügende Zähigkeit und eine zu hohe Feuchtigkeitsabsorption auf.

Eine verbesserte Zähigkeit wird durch den Einsatz von zweikernigen Allylphenolen oder veretherten Allylphenolen erreicht, wie z.B. in der US-A-4 100 140 beschrieben. Diese Comonomeren weisen jedoch eine verhältnismäßig sehr niedrige Schmelzviskosität auf, wodurch sich beim Imprägnieren von Verstärkungsfasern Schwierigkeiten ergeben. Infolge der relativ kurzen Kettenlänge und des daraus resultierenden relativ großen Anteils an aliphatischen Strukturelementen besitzen diese Harze eine für bestimmte Anwendungen nicht ausreichende thermooxidative Beständigkeit.

Der Erfindung lag daher die Aufgabe zugrunde, Bismaleinimidharze bereitzustellen, welche die genannten Nachteile nicht aufweisen.

Diese Aufgabe wird durch die erfindungsgemäßen Harze, welche polycyclische Comonomere auf Dicyclopentadien-Basis enthalten, gelöst. Sie weisen eine gute Löslichkeit, eine günstige Schmelzviskosität und damit ein gutes Imprägnierverhalten auf. Ausgehärtete Formmassen zeigen eine gute Hitzebeständigkeit, ein günstiges Zähigkeitsverhalten und eine geringe Wasseraufnahme.

Den erfindungsgemäß einzusetzenden Comonomeren der Formel I (siehe Patentanspruch) ist gemeinsam, daß sie polycyclische Verbindungen bzw. Gemische von Verbindungen sind, die Dicyclopentan- und Phenolringe enthalten, wobei letztere eine Alkenyl-oder Alkinylgruppe tragen. Die Reste R bzw. R′ der erfindungsgemäßen Comonomeren I sind vorzugsweise Allyl-, Propenyl- oder Propargylgruppen.

Ausgangssubstanzen zur Herstellung der Alkenyl- bzw. Alkinylarene sind Polyphenole der Formel

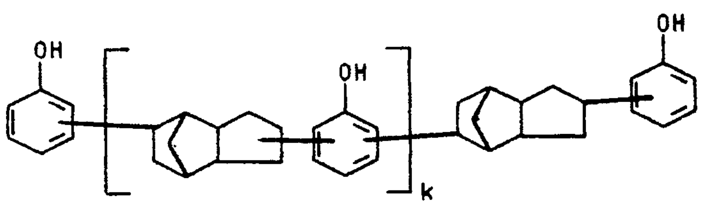 ,

wobei 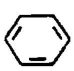 und k die gleiche Bedeutung wie im Patentanspruch haben.

Diese Polyphenole werden hergestellt durch Umsetzung von Dicyclopentadien z.B. mit Phenol, o-Kresol, p-Kresol oder anderen Monophenolen, wie in US-A-3 419 624 beschrieben ist. Dabei werden Oligomerengemische erhalten, so daß k im Mittel größer als 0 ist. Das Molekulargewicht kann man durch das Verhältnis von Dicyclopentadien zu der Phenolkomponente einstellen. Bevorzugt liegt K zwischen 0,1 und 3,0.

Die Alkenyl- bzw. Alkinylarene werden hergestellt durch Umsetzung der eben beschriebenen Polyphenole mit Alkenyl- bzw. Alkinylhalogeniden nach dem in DE-A 28 18 091 beschriebenen Prinzip. Bevorzugt sind Allylchlorid, Allylbromid, Methallylchlorid und Propargylchlorid.

Man erhält dabei zunächst die entsprechend O-Alkenyl- bzw. Alkinylether (R′ = H, R = Alkenyl oder Alkinyl). Im Falle der O-Alkenylether lassen sich diese in einer Claisen-Umlagerung (nach DE-A 28 18 091) in die entsprechenden Alkenylphenole (R′ = Alkenyl, R = H) umwandeln. Beim Einsatz von Alkinylhalogeniden, z.B. Propargylchlorid, entstehen bereits bei der Veretherung Gemische zwischen Alkinylether und Alkinylphenol.

Die durch Allylierung herstellbaren Allylphenole lassen sich weiterhin basenkatalysiert nach EP-A 14 816 in die ebenfalls erfindungsgemäßen Propenylphenole überführen.

Die erfindungsgemäßen Bismaleinimidharze werden erhalten durch Umsetzung der Alkenyl- bzw. Alkinylarene mit einem Bismaleinimid der allgemeinen Formel

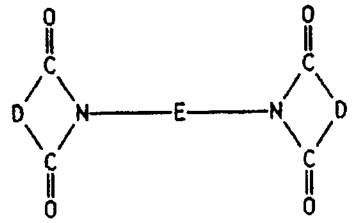

in der D eine gegebenenfalls substituierte Kohlenstoffdoppelbindung ist und E einen zweiwertigen Rest mit zumindest zwei Kohlenstoffatomen bedeutet. Bismaleinimide sind z.B. aus DE-A-2 040 094, DE-A-2 719 903 und DE-A-3 247 058 bekannt. Neben Bismaleinimiden sind grundsätzlich auch Polymaleinimide, sowie Mischungen verschiedener Bismaleinimide geeignet. Bevorzugte Bismaleinimide sind 4,4'-Bismaleinimidodiphenylmethan, 4,4'-Bismaleinimidodiphenylether, 3,3'-Bismaleinimidodiphenylsulfon, 1,3-Bismaleinimidobenzol, 2,4-Bismaleinimidotoluol, 1,6-Bismaleinimidohexan und 2,2,4-Trimethyl-1,6-bismaleinimidohexan. Es können auch bis zu 20 Gew.% eines Monoimids enthalten sein.

Das Mischungsverhältnis bei der Umsetzung des Bismaleinimids mit den Alkenyl- bzw. Alkinylarenen ist relativ frei wählbar, wobei ein Äquivalent-Verhältnis von 1 zu 0,05 bis 5 vorzuziehen ist. Man nimmt an, daß bei der Umsetzung neben einer vermutlich radikalisch initiierten Copolymerisation auch Reaktionen vom Additionstyp, wie z.B. En-Reaktionen und Diels-Alder-Reaktionen ablaufen.

Je nach beabsichtigtem Verwendungszweck kann es vorteilhaft sein, den erfindungsgemäßen Harzen weitere Komponenten beizufügen. In Frage kommen beispielsweise übliche Epoxidharze oder Vinylesterharze.

Weitere einsetzbare Zusatzkomponenten sind Amine, bevorzugt aromatische Diamine (z.B. 4,4'-Diaminodiphenylmethan) und Aminophenole, die ebenfalls eine Additionsreaktion mit den Maleinimiddoppelbindungen eingehen können. Es können auch Präpolymere, z.B. aus einem Bisimid und einem Amin eingesetzt werden.

Für bestimmte Anwendungen kann es auch zweckmäßig sein, zur Einstellung einer gewünschten Viskosität geeignete Vinylmonomere, z.B. Styrol, α-Methylstyrol, Divinylbenzol, Acryl- oder Methacrylsäureester, Diallylphthalat, 3,3'-Diallylbisphenol A, Triallylisocyanurat, Triallylcyanurat oder Vinylpyrrolidon einzusetzen. Ihr Anteil kann bis zu 50 Gew.%, bezogen auf die Mischung, betragen.

Die erfindungsgemäßen Mischungen können als weitere Zusätze Katalysatoren oder auch Inhibitoren enthalten. Geeignete Katalysatoren sind tertiäre Amine oder Phosphine, Imidazole oder organische Säuren oder Peroxide. Als Inhibitoren sind Hydrochinon, Benzochinon oder Phenothiazin zu nennen. Die Menge an eingesetzten Initiatoren und Inhibitoren soll etwa zwischen 0,05 - 1,5 Gew.% liegen.

Die erfindungsgemäßen Mischungen können weitere Zusätze, die in der Technologie der härtbaren Kunststoffe üblich sind, enthalten, wie Füllstoffe, Weichmacher, Pigmente, Farbstoffe, Formtrennmittel, flammhemmende Stoffe. Als Füllstoffe können auch Glas- und Kohlenstoffasern, Graphitpulver, Glimmer, Quarzpulver, Koalin oder Metallpulver bis zu einem Anteil von 80 Gew.%, bezogen auf die Mischung, verwendet werden.

Die erfindungsgemäßen Mischungen sind als Imprägnier-, Gieß- und Laminierharze oder als Formmassen (gefüllt oder ungefüllt) einsetzbar.

Dienen sie zur Herstellung von Hochleistungsverbundwerkstoffen, so kann die Tränkung von Glas-, Kohlenstoff- oder Aramidfasern unter Bildung von unidirektionalen oder Gewebeprepregs entweder aus der Schmelze bei 50-150 °C oder aus Lösung erfolgen. Geeignete Lösungsmittel sind halogenierte Kohlenwasserstoffe, wie z.B. Dichlormethan, Ketone wie z.B. Aceton oder Methylethylketon, Glykolester, Toluol, Dimethylformamid, N-Methylpyrrolidon bzw. Gemische aus mehreren Lösungsmitteln.

Zur Herstellung der erfindungsgemäßen Bismaleinimidharze werden die Ausgangsmaterialien unter Anwendung der üblichen Techniken vermischt und auf Temperaturen zwischen 70 - 190 °C erhitzt, wobei die Bildung eines Präpolymeren erfolgt. Je nach Fortschritt der Vorpolymerisation erhält man eine hochviskose Schmelze oder einen glasartig erstarrten Feststoff, der je nach Verwendungszweck gemahlen oder in einem Lösungsmittel gelöst wird. Die Herstellung der Harze kann auch in einem der oben genannten Lösungsmittel erfolgen.

Die Härtung der erfindungsgemäßen Harze erfolgt bei Temperaturen von ca. 100 bis 300 °C, gegebenenfalls unter Druck, vorzugsweise zwischen 160 bis 260 °C. Die gewählte Härtungstemperatur hängt entscheidend von der Länge der Härtungszeit ab und umgekehrt. Vielfach ist eine stufenweise Härtung vorteilhaft, wobei bei einer niedrigeren Temperatur zunächst unter Formgebung eine Vernetzung der Polymeren herbeigeführt wird. Nach Entformen kann sich dann zur vollständigen Aushärtung eine unter

Umständen mehrstündige Nachhärtung oberhalb 200 °C anschließen.

Aus den erfindungsgemäßen Harzen können Hochleistungswerkstoffe, z.B. Isoliermaterialien, Strukturbauteile, Apparategehäuse und elektrische Bauteile hergestellt werden, die hohen Temperaturen ausgesetzt sind.

Beispiel 1

a) Herstellung eines Polyphenols aus Dicyclopentadien und Phenol (k = ca. 0.3)

Die Mischung von 940 g Phenol und 250 g des sauren Ionenaustauschers ®Lewatit SPC-118 wird bei 70 °C aufgeschmolzen, anschließend wird das Heizbad entfernt. Innerhalb 1 Std. tropft man 132 g Dicyclopentadien so zu, daß eine Temperatur von 70 °C eingehalten wird. Nach weiteren 24 Std. bei 70 °C wird der Ionenaustauscher abfiltriert und mit geschmolzenem Phenol gewaschen. Man destilliert das überschüssige Phenol im Vakuum ab und erhält als Rückstand 236 g rotbraunes Polyphenol mit einem Erweichungspunkt von 66 °C (Koflerbank); OH-Zahl: 10.25 %.

b) Allylierung des Polyphenols

Die Mischung aus 217.6 g Polyphenol nach a), 55.8 g Natriumhydroxid und 1000 ml n-Propanol wird auf ca. 90 °C aufgeheizt und innerhalb 1 Stunde 135.2 g Allylchlorid zugetropft. Man rührt weitere 6 Stunden unter Rückfluß und filtriert nach Abkühlen das ausgefallene Natriumchlorid ab. Nach Abdestillieren des Lösungsmittel verbleiben 230 g des entsprechenden O-Allylethers als Öl mit einer Viskosität von 40 mPas bei 100 °C.

c) Claisen-Umlagerung des Allylethers

230 g des Allylethers nach b) werden nach Anlegen eines Vakuums von ca. 1 mbar 3 Stunden auf 210 °C erhitzt. Man erhält 228 g ortho-Allylphenoladdukt von Dicyclopentadien als rotbraunes hochviskoses Harz, das bei Raumtemperatur langsam erstarrt;
Erweichungspunkt: ca. 20 °C (Koflerbank), NMR ($D_6$-DMSO, 270 MHz):
0.85-2.95 m (DCPD-H), 3.20-3.50 (m, 4 H, Allyl-$CH_2$), 5.00 (s, OH, überlagert), 4.90-5.25 (m, 4H, olef. H), 5.95-6.05 (m, 2H, olef. H), 6.60-7.20 (m, arom.).

d) Herstellung eines Bismaleinimidharzes aus DCPD-Allylphenol 1c

In einem Reaktionsgefäß werden unter Rühren bei einer Badtemperatur von 160 °C zu 300 g des ortho-Allylphenoladduktes nach c) sowie 3 g 2,6-Dimethylhydrochinon 700 g 4,4'-Bismaleinimidodiphenylmethan portionsweise zuzugeben. Die niedrigviskose Harzmasse wird nach 10minütigen Erhitzen wie folgt weiterverarbeitet:

1) Ein kleiner Teil des Harzes wird zwecks schnelleren Abkühlens auf eine Metallfolie gegossen. Nach Erkalten besitzt das rotbraune Harz einen Erweichungspunkt von 50 °C (Koflerbank); seine Gelzeit bei 160 °C beträgt 1 Stunde und 17 Minuten.

2) Der restliche Teil der Harzmasse wird in 1 mm und 4 mm dicke Metallformen gegossen und 2 Stunden bei 160 °C, 5 Stunden bei 190 °C und 8 Stunden bei 240 °C gehärtet. Das Polymer besitzt eine Glasübergangstemperatur oberhalb von 300 °C (nach DIN 53 455); bei 345 °C besitzt es noch 50 % seines Raumtemperatur-Schubmoduls (nach DIN 53 455); E-Modul: 3850 N/mm² (DIN 53 457); Schlagzähigkeit: 9,1 kJ/m² (DIN 53 453); Wasserabsorption nach 24stündiger Lagerung in kochendem Wasser: 3,72 %.

Beispiel 2

Herstellung eines Bismaleinimidharzes aus DCPD-Allylether

Analog Beispiel 1d) wird aus 300 g DCPD-Allylether nach Beispiel 1b), 700 g 4,4'-Bismaleinimidodiphenylmethan und 3 g 2,6-Dimethylhydrochinon ein Bismaleinimid-Harz hergestellt und gehärtet; Glasübergangstemperatur des Polymeren: oberhalb 300 °C; 50 %-Wert des Raumtemperatur-Schubmoduls: 330 °C; E-Modul: 3790 N/mm².

Beispiel 3

a) Allylierung eines Polyphenols aus Kresol und Dicyclopentadien (k = 0,5)

Die Mischung aus 360 g eines Polyphenols, hergestellt analog Beispiel 1a) aus Kresol und Dicyclopentadien, und 82 g Natriumhydroxid in 1000 ml n-Propanol wird mit 196 ml Allylchlorid analog Beispiel 1b) umgesetzt. Man erhält 350 g (80 %) 0-Allylether.

b) Claisen-Umlagerung des Allylethers

350 g DCPD-Kresolallylether aus 3a) werden analog Beispiel 1c) in das entsprechende Allylkresol überführt; Ausbeute: 348 g (79 %); $^1$H-NMR (270 MHz, $D_6$-DMSO): 0.8-2.35 (m), 2.15 (s, $CH_3$), 2.70-3.0 (m), 3.30 (d, $CH_2$-Allyl), 4.90-5.10 (m, $CH_2$-olef.), 5.80-6.0 (m, CH-olef.), 6.60-6.90 (m), ca. 7.80 (OH).

c) Herstellung eines Bismaleinimidharzes aus DCPD-Allykresol

Analog Beispiel 1d) wird aus 40 g DCPD-Allylkresol aus 3b), 160 g 4,4'-Bismaleinimidodiphenylmethan, 0,4 g 2,6-Dimethylhydrochinon und 0,2 g Triphenylphosphin ein Harz hergestellt und gehärtet; Erweichungspunkt des Harzes: 65 °C; Gelzeit (160 °C): 63 min; Glasübergangstemperatur des Polymeren: oberhalb 300 °C.

Beispiel 4

a) Herstellung eines alkinylgruppenhaltigen Polyphenols

Die Mischung aus 300 g Polyphenol nach Beispiel 1a), 77 g Natriumhydroxid in 1000 ml n-Propanol wird mit 181 g Propargylchlorid analog Beispiel 1b) umgesetzt. Man erhält 311 g eines öligen Produktes, das zu ca. 80 % aus DCPD-Phenolpropargylether und ca. 20 % DCPD-Propargylphenol besteht; $^1$H-NMR (270 MHz, $D_6$-DMSO): 0.8-2.20 (m), 2.82 (m), 3.55 (m, $CH_2$-Propargyl-Aryl), 4.70-4.85 (m, $CH_2$-Propargylether), 6.70-7.35 (m).

b) Herstellung eines Bismaleinimidharzes aus DCPD-Propargylphenol(-ether)

Analog Beispiel 1d) wird aus 30 g DCPD-Propargylphenol aus 4a), 70 g 4,4'-Bismaleinimidodiphenylmethan, 0,2 g 2,6-Dimethylhydrochinon und 0,1 g Triphenylphosphin ein Harz hergestellt und gehärtet; Erweichungspunkt des Harzes: 40 °C; Glasübergangstemperatur des Polymeren: oberhalb 300 °C; Wasseraufnahme: 3.55 %.

Beispiel 5

a) Herstellung eines propenylgruppenhaltigen Polyphenols

Die Mischung aus 200 g Polyphenol nach Beispiel 1a), 73 g Kaliumhydroxid und 150 g Methanol wird 12 Stunden auf 110 °C erhitzt. Nach Abkühlen wird mit konzentrierter Salzsäure neutralisiert und mit Dichlormethan extrahiert. Man erhält nach Trocknen über Natriumsulfat und Eindampfen im Vakuum 186 g DCPD-Propenylphenol mit Erweichungspunkt 49 °C.

b) Herstellung eines Bismaleinimidharzes aus DCPD-Propenylphenol

Analog Beispiel 1d) wird aus 40 g DCPD-Propenylphenol nach 5a), 160 g 4,4'-Bismaleinimidodiphenylmethan, 0,4 g 2,6-Dimethylhydrochinon ein Harz hergestellt und gehärtet; Erweichungspunkt des Harzes: 58 °C; Glasübergangstemperatur des Polymeren: oberhalb 300 °C.

## Patentansprüche

1. Hitzehärtbare Formmassen, enthaltend ein Bismaleinimid und ein Alkenyl-oder Alkinylgruppen enthaltendes Comonomeres im Äquivalentverhältnis von 1 zu 0,05 bis 5, wobei das Comonomere die Formel I aufweist:

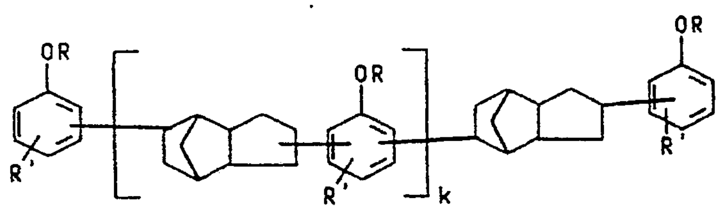 (I)

in der

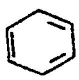 ein Benzolkern ist, der gegebenenfalls durch $C_1$-$C_6$-Alkyl-, Alkoxy-, Aryl-, Halogen- oder Nitrogruppen substituiert sein kann,

k im Mittel größer als Null ist,
und entweder
a) R ein Alkenyl- oder Alkinylrest mit 3 bis 6 C-Atomen und R' = H ist, oder
b) R' ein Alkenyl- oder Alkinylrest mit 3 bis 6 C-Atomen und R = H ist.

2. Hitzehärtbare Formmassen nach Anspruch 1, dadurch gekennzeichnet, daß R bzw. R' Allyl-, Propenyl- oder Propargylgruppen sind.

3. Hitzehärtbare Formmassen nach Anspruch 1, dadurch gekennzeichnet, daß k im Mittel zwischen 0,1 und 3,0 liegt.

4. Verwendung der Formmassen nach Anspruch 1 zur Herstellung von Faserverbundwerkstoffen.

## Claims

1. A heat curable molding composition containing a bismaleimide and an alkenyl- or alkynyl-containing comonomer in an equivalent ratio of from 1:0.05 to 1:5, wherein said comonomer has the formula I

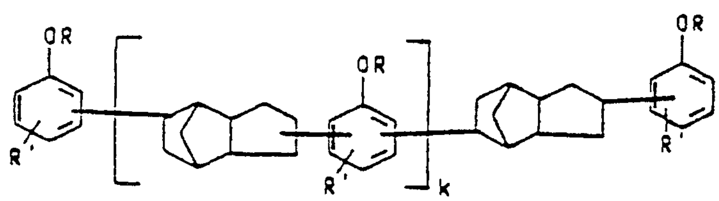 (I)

where

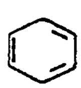 is a benzene ring which may be substituted by $C_1$-$C_6$-alkyl, alkoxy, aryl, halogen or nitro,

k is on average greater than zero, and either
a) R is alkenyl or alkynyl of from 3 to 6 carbon atoms and R' is hydrogen or
b) R' is alkenyl or alkynyl of from 3 to 6 carbon atoms and R is hydrogen.

2. A heat curable molding composition as claimed in claim 1, wherein R or R' is allyl, propenyl or propargyl.

3. A heat curable molding composition as claimed in claim 1, wherein k is on average within the range from 0.1 to 3.0.

4. The use of a molding composition as claimed in claim 1 for producing a fiber composite material.

**Revendications**

1. Masses à mouler thermodurcissables, contenant un bismaléimide et un comonomère contenant des groupements alcényle ou alcynyle, dans un rapport d'équivalents de 1 à 0,05 à 5, le comonomère ayant la formule I

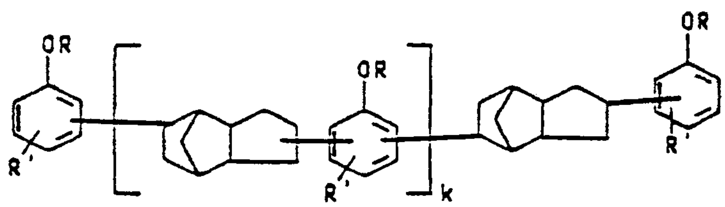

(I)

dans laquelle

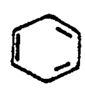

est un noyau benzène qui peut être substitué éventuellement par des radicaux alkyle en $C_1$-$C_6$, alcoxy, aryle, halogéno ou nitro,

k est en moyenne supérieur à zéro
et soit
a) R est un reste alcényle ou alcynyle ayant de 3 à 6 atomes de carbone et R' = H,
soit
b) R' est un reste alcényle ou alcynyle ayant de 3 à 6 atomes de carbone et R = H.

2. Masses à mouler thermodurcissables selon la revendication 1, caractérisées en ce que R ou R' sont des groupements allyle, propényle ou propargyle.

3. Masses à mouler selon la revendication 1, caractérisées en ce que k est en moyenne compris entre 0,1 et 3,0.

4. Utilisation des masses à mouler selon la revendication 1 pour la préparation de matériaux composites renforcés par des fibres.